# EUROPÄISCHE PATENTSCHRIFT

(11) **EP 0 395 011 B1**
(45) Veröffentlichungstag und Bekanntmachung des Hinweises auf die Patenterteilung: **22.03.1995**
(21) Anmeldenummer: 90107861.8
(22) Anmeldetag: 25.04.1990
(51) Int. Cl.: H04N 1/00, H04N 1/32

(54) **Verfahren zum Übermitteln von Video-Bildinformationen über eine Faksimile-Teilnehmereinrichtung**
Process for transmitting video-image information to a facsimile subscriber installation
Procédé de transmission d'informations d'image vidéo vers une installation d'abonné de fac-similé

(30) Priorität: 28.04.1989 DE 3914174
(43) Veröffentlichungstag der Anmeldung: 31.10.1990
(73) Patentinhaber: SIEMENS AKTIENGESELLSCHAFT, 80333 München (DE)
(72) Erfinder: Biedermann, Kurt, D-8134 Pöcking (DE)

(56) Entgegenhaltungen:
- NEC RESEARCH AND DEVELOPMENT. 1985, TOKYO JP Seiten 45 - 56; OKOCHI ET AL.:"WORKSTATION BASED ON STILL PICTURE"
- PATENT ABSTRACTS OF JAPAN vol. 13, no. 261 (P-885) 16 Juni 1989,& JP-A-01 054600

## Beschreibung

In öffentlichen und privaten Kommunikationsnetzen, insbesondere im Fernsprechnetz, wird ein Kommunikationsdienst geboten, mit dessen Hilfe Bild- oder Textinformationen von Papiervorlagen kopiert und zu einem anderen Teilnehmer übermittelt werden können. Dieser Kommunikationsdienst wird deshalb als Fernkopierdienst, aber auch als Faksimile-Dienst oder kurz Telefax bezeichnet. Will ein Teilnehmer im Fernsprechnetz den Dienst "Fernkopieren" nutzen, so wird zusätzlich zu dem bereits vorhandenen Fernsprechendgerät eine Faksimile-Teilnehmereinrichtung angeschlossen. Wenn mit Hilfe der Signalisierungsmittel des Fernsprechapparates eine Verbindung zu einem gewünschten Teilnehmer hergestellt ist und die Papiervorlage in die Faksimile-Teilnehmereinrichtung eingelegt ist, wird diese dort mit Hilfe einer Abtasteinrichtung in einer vorgegebenen Reihenfolge abgetastet, anschließend in Bildinformationen mit vorgegebenem Datenformat umgesetzt und an eine in der Faksimile-Teilnehmereinrichtung angeordnete Kommunikationseinrichtung geführt. In dieser werden die Bildinformationen in für die Übertragung über das Fernsprechnetz geeignete elektrische Signale umgesetzt und dem gewünschten Teilnehmer übermittelt. Mit Hilfe dieser Kommunikationseinrichtung wird außerdem die Übermittlung der Bildinformationen nach einem vorgegebenen Faksimile-Übermittlungsprotokoll gesteuert. Diese Steuerungs-, Übermittlungs- und Abtastprozeduren sind in mehreren internationalen CCITT-Empfehlungen, den Empfehlungen T.2, T.3, T.4, T.6 sowie T.30, T.62, T.70, T.72 und T.73, standardisiert bzw. definiert. Derartige Faksimile-Teilnehmereinrichtungen und deren Technik sind aus der Druckschrift "Unterrichtsblätter der Deutschen Bundespost", Jahrgang 39/1986, Nr. 5, Seiten 248 bis 253, Technik der Fernkopierer, bekannt. Dieser Druckschrift ist zu entnehmen, daß drei Gruppen von Faksimile-Teilnehmereinrichtungen hinsichtlich Bildauflösung, Übertragungs- und Faksimile-Übermittlungsprozedur sowie Steuerprozedur standardisiert sind.

Des weiteren ist bekannt, daß mit Hilfe von Videokameras räumliche Gegenstände auf Bildschirmeinrichtungen dargestellt werden können, wie beispielsweise Video-Überwachungsanlagen oder neuerdings Video-Fotoapparate. Hierbei werden mit einer Videoabtasteinrichtung die räumlichen Gegenstände hinsichtlich der Helligkeit der einzelnen Abtastpunkte in einer vorgegebenen Reihenfolge abgetastet und Video-Bildinformationen gebildet. Diese Video-Bildinformationen können über eine Leitung, aber auch über Kommunikationsnetze mit entsprechender Übertragungsbandbreite übermittelt und anschließend in einer Bildschirmeinrichtung angezeigt werden.

Aus der Druckschrift "NEC Research and Development", 1985, Tokyo, JP, Seiten 45 - 56, "Workstation based on still picture" ist desweiteren bekannt, Videokameras an einen Personalcomputer anzuschließen und die hierbei gebildeten Video-Bildinformationen zu speichern bzw. zu bearbeiten und ggfs. über einen Datenübertragungsanschluß mit entsprechender Übertragungsbandbreite über ein Kommunikationsnetz an einen weiteren Personalcomputer zu übermitteln und dort anzuzeigen bzw. zu speichern. Eine Aufbereitung bzw. Anpassung der Video-Bildinformationen ist hierbei nicht vorgesehen.

Die der Erfindung zugrundeliegende Aufgabe besteht darin, das in einer Faksimile-Teilnehmereinrichtung verwendete bekannte Faksimile-Verfahren derart zu ergänzen, daß das mit Hilfe einer Videokamera erzeugte Abbild eines räumlichen Gegenstandes sowohl über das Kommunikationsnetz übermittelt als auch auf einer Papiervorlage einer Faksimile-Teilnehmereinrichtung dargestellt werden kann. Die Aufgabe wird durch die Merkmale des Anspruchs 1 gelöst.

Der wesentliche Vorteil der Erfindung ist darin zu sehen, daß die Video-Bildinformationen unter Zwischenschaltung eines Bildspeichers in Informationen umgesetzt werden, die hinsichtlich Format und physikalischer bzw. elektrischer Eigenschaften denen in einer Faksimile-Teilnehmereinrichtung gebildeten Informationen entsprechen. Bei der Abtastung der Papiervorlagen bzw. des räumlichen Gegenstandes in der Faksimile-Teilnehmereinrichtung bzw. Videoeinrichtung ergeben sich aufgrund unterschiedlich verwendeter standardisierter Verfahren und Prozeduren unterschiedliche Bildpunkte pro Zeile, Zeilen pro Bild bzw. Bildformat und Codierungen der Helligkeitswerte. Die sich daraus ergebenden Schwierigkeiten werden durch eine vorteilhafte Weiterbildung der Erfindung - Anspruch 2 - ausgeräumt. Diese unterschiedlichen Bildformate können beispielsweise durch einfache Drehung des Bildes um 90° - hierdurch werden Zeilen zu Spalten und umgekehrt - mit Hilfe eines Bildwandlers angepaßt werden. Die Anzahl der Bildpunkte kann durch Zusammenfassen mehrerer Bildpunkte oder umgekehrt durch Wiederholen von Bildpunkten reduziert bzw. erhöht werden. Damit synchron ist ein Integrieren der Helligkeitswerte von zu Gruppen zusammengefaßten Bildpunkten oder ein Wiederholen der Helligkeitswertinformationen und damit generell eine Umcodierung der Helligkeitswerte von Video-Bildinformationen in Faksimile-Bildinformationen und umgekehrt vorzunehmen.

Ist der Dienst "Fernkopieren" im Fernsprechnetz implementiert - das ist überwiegend der Fall - so wird der Verbindungsaufbau und -abbau mit Hilfe der Signalisierungsmittel, beispielsweise einer Wähltastatur, eines Fernsprechendgerätes bzw. Fernsprechapparates durchgeführt - siehe Anspruch 3. Hierbei ist der Fernsprechapparat über eine Umschalteeinrichtung, an die auch die Faksimile-Teilnehmereinrichtung angeschlossen ist, mit dem Fernsprechnetz verbunden. Nachdem die Verbindung durch die beiden beteiligten Fernsprechapparate aufgebaut ist, wird der Informationsaustausch zwischen den beiden Faksimile-Teilnehmereinrichtungen eingeleitet. Die Signalisierungsfunktionen des Fernsprechapparates können auch in der Faksimile-Teilnehmereinrichtung angeordnet werden, wodurch, wenn auf Sprachkommunikation verzichtet wird, der Fernsprechapparat nicht mehr erforderlich ist.

Kann keine Verbindung zu einer gewünschten Faksimile-Teilnehmereinrichtung aufgebaut werden - beispielsweise, weil diese belegt ist - so können die Faksimile-gerechten Bildinformationen nach einer vorteilhaften Ausgestaltung des erfindungsgemäßen Verfahrens an eine dieser Faksimile-Teilnehmereinrichtung zugeordneten Speichereinrichtung (Mailbox) einer Kommunikationseinrichtung des Kommunikationsnetzes, beispielsweise einer Fernsprechvermittlung, durch eine entsprechende Verbindungssignalisierung übermittelt werden - siehe Anspruch 4. Hierbei wird das Vorliegen der Faksimile-gerechten Bildinformationen der der Speichereinrichtung zugeordneten Faksimile-Teilnehmereinrichtung optisch oder akustisch angezeigt - siehe Anspruch 5. Die optische oder akustische Anzeige kann in der Faksimile-Teilnehmereinrichtung selbst oder aber auch in dem zugeordneten Fernsprechapparat erfolgen.

In welcher Einrichtung die Informations- und Formatwandlereinrichtung sowie die Adaptionsmittel unterzubringen sind, hängt vom jeweiligen Realisierungskonzept ab. Soll die Faksimile-Teilnehmereinrichtung möglichst unverändert bleiben, so sind die Informations- und Formatwandlereinrichtung sowie die Adaptionsmittel der Videoeinrichtung zuzuordnen - siehe Anspruch 6. Hierbei sind in der Faksimile-Teilnehmereinrichtung zusätzlich nur eine Steck- und eine Umschalteinrichtung zu implementieren. Die Videoeinrichtung einschließlich aller Anpassungsmittel kann durch einfaches Anstecken an die Faksimile-Teilnehmereinrichtung angeschlossen werden. Bei dieser Realisierungsvariante ist jedoch eine neu zu konzipierende Videoeinrichtung erforderlich.

Soll eine herkömmliche Videokamera verwendet werden, die einfach an die Faksimile-Teilnehmereinrichtung anzustecken ist, so sind die Informations- und Formatwandlereinrichtung sowie die Adaptionsmittel der Faksimile-Teilnehmereinrichtung zuzuordnen - siehe Anspruch 7. Dies bedeutet, daß die Faksimile-Teilnehmereinrichtung generell für den Anschluß einer Videokamera vorbereitet werden muß.

Sollen eine Videokamera und eine Faksimile-Teilnehmereinrichtung möglichst unverändert weiterbenutzt werden können, so sind die Informations- und Formatwandlereinrichtung sowie die Adaptionsmittel in einer separaten Adaptereinrichtung anzuordnen - siehe Anspruch 8. Hierbei sind zwar mehrere Steckeinrichtungen und Verbindungen - siehe Anspruch 1 - zu erstellen, jedoch sind bei diesem Realisierungskonzept wenige Neuentwicklungen und geringe Vorleistungen erforderlich.

Im folgenden wird das erfindungsgemäße Verfahren anhand eines Blockschaltbildes erläutert.

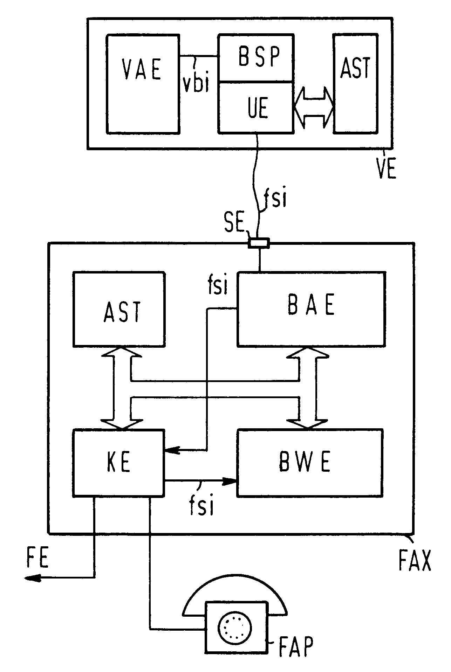

Figur 1 zeigt ein Blockschaltbild einer Videoeinrichtung VE und einer Faksimile-Teilnehmereinrichtung FAX, die an ein Fernsprechnetz FE angeschlossen ist. In der Videoeinrichtung VE ist eine Bildabtasteinrichtung VAE und eine Bildspeichereinrichtung BSP mit nachgeschalteter Umsetzeinrichtung UE angeordnet, die von einer Ablaufsteuerung AST gesteuert wird. Die Bildabtasteinrichtung VAE ist durch eine Videokamera realisiert. In dieser Video-Kamera werden die räumlichen Gegenstände hinsichtlich ihrer Helligkeitswerte in einer vorgegebenen Reihenfolge- d. h. mit vorgegebenen Abtastpunkten pro Zeile und Anzahl der Zeilen - abgetastet und aus den mit den Helligkeitswerten versehenen Abtastinformationen eine Video-Bildinformation vbi gebildet und an die Bildspeichereinrichtung BSP geführt. Geht man von der sehr weit verbreiteten Fernsehnorm aus, so ergeben sich bei einer schwarz-weiß Aufnahme ca. 520.000 Bildpunkte bzw. Video-Bildinformationen. Diese Video-Bildinformationen vbi werden solange in der Bildspeichereinrichtung BSP gespeichert, bis die Übertragung an die Faksimile-Teilnehmereinrichtung FAX beendet ist. Die Bildspeichereinrichtung BSP kann durch handelsübliche Halbleiter-Schaltkreise oder aber auch durch komfortablere Floppy-Speichereinrichtungen realisiert sein. Die Video-Bildinformationen vbi werden von der Umsetzeinrichtung UE nacheinander aus der Bildspeichereinrichtung BSP gelesen, entsprechend umgesetzt und an die Faksimile-Teilnehmereinrichtung FAX weitergeleitet. In dieser Umsetzeinrichtung UE sind der Informations- und Formatwandler sowie die Adaptionsmittel angeordnet. Die Wirkungsweise der Umsetzeinrichtung hinsichtlich Bildpunkte pro Zeile, Zeilen pro Bild und Helligkeitscodierung entspricht der in der Beschreibungseinleitung erläuterten. Gesteuert wird die Umsetzeinrichtung UE durch eine Ablaufsteuerung AST. Diese ist üblicherweise durch einen Mikroprozessor - vorzugsweise 1 Chip-Mikroprozessor - realisiert. Am Ausgang der Umsetzeinrichtung UE liegen die Bildinformationen Faksimile-informations- und -formatgerecht vor. Diese Faksimile-gerechten Bildinformationen gelangen an einen Steckeingang SE der Faksimile-Teilnehmereinrichtung FAX und von dort zu einer Bildabtasteinrichtung BAE. In dieser Bildabtasteinrichtung BAE wird eine Papiervorlage zeilenweise abgetastet. Hierbei werden die Helligkeitswechsel der Reihe nach in elektrische Signale umgewandelt. Die Abtastung wird üblicherweise durch eine Fotodiodenkette (CCD-Scanner, Charge-Coupled-Device) durchgeführt. Die abgetasteten Helligkeitswerte werden je nach verwendetem Verfahren - in den CCITT-Empfehlungen T.2 bis T.5 definiert - codiert. Diese codierten Abtastwerte bzw. Abtastinformationen stellen die Faksimile-gerechten Bildinformationen fsi dar. Je nach dem, ob in der Videoeinrichtung VE oder in der Bildabtasteinrichtung BAE die Faksimile-gerechten Bildinformationen fsi gebildet wurden, werden diese in der Bildabtasteinrichtung BAE an eine Kommunikationseinrichtung KE gesteuert. Diese Kommunikationseinrichtung KE ist einerseits mit dem Fernsprechnetz FE und andererseits mit einem Fernsprechapparat FAP verbunden.

Mit Hilfe der Signalisierungsprozedur - Wähltastatur - des Fernsprechapparates FAP wird eine Verbindung zu einer gewünschten Faksimile-Teilnehmereinrichtung FAX hergestellt. Nachdem der Verbindungsaufbau zwischen den beiden Fernsprechapparaten FAP durchgeführt ist, wird durch die beiden Kommunikationseinrichtungen KE mit Hilfe einer Faksimile-Signalisierungsprozedur eine logische Verbindung zwischen den beiden Kommunikationseinrichtungen KE hergestellt. Anschließend werden die von der Bildabtasteinrichtung BAE übermittelten Faksimile-gerechten Bildinformationen fsi mit Hilfe einer Übermittlungsprozedur und einer Modulations- bzw. Demodulationseinrichtung über das Fernsprechnetz FE übermittelt bzw. empfangen.

Die empfangenen Faksimile-gerechten Bildinformationen FSI werden an eine Bildwiedergabeeinrichtung BWE weitergeleitet. In dieser Bildwiedergabeeinrichtung BWE werden die empfangenen Faksimile-gerechten Bildinformationen FSI decodiert bewertet und mit einer Druckeinrichtung auf einer Papiervorlage dargestellt.

Sowohl die Bildabtasteinrichtung BAE als auch die Bildwiedergabeeinrichtung BWE und die Kommunikationseinrichtung KE werden von einer Ablaufsteuerung AST gesteuert. Diese in üblicher Weise Prozessortechnik realisierte Ablaufsteuerung AST stellt das Bindeglied zwischen den Einrichtungen dar. In dieser Ablaufsteuerung AST werden sowohl die Kommandos des Benutzers - Tastendruck - als auch die unterschiedlichen Verbindungszustände, die Abtastung sowie alle Prozedur- und Steuerungsvorgänge durchgeführt.

## Patentansprüche

1. Verfahren zum Übermitteln von in einer Videoeinrichtung (VE) mit Hilfe einer Videokamera (VAE) gebildeten und ein Bild repräsentierenden Video-Bildinformationen (vbi) über eine an ein Kommunikationsnetz (FE) angeschlossene Faksimile-Teilnehmereinrichtung (FAX) mit Hilfe einer Faksimile-Übermittlungsprozedur an eine weitere an das Kommunikationsnetz (FE) angeschlossene und durch eine Verbindungssignalisierung bestimmte Faksimile-Teilnehmereinrichtung (FAX), in der die im Faksimile-Format empfangenen Bildinformationen (fsi) bewertet und mit Hilfe der in der Faksimile-Teilnehmereinrichtung vorhandenen Bildwiedergabeeinrichtung (BWE) auf einer Papiervorlage dargestellt werden, wobei die in der Videoeinrichtung (VE) gebildeten Video-Bildinformationen (vbi) in einem Bildspeicher (BSP) zwischengespeichert und mit Hilfe von Informations- und Formatwandlereinrichtungen (UE) sowie Adaptionsmitteln in Faksimile-format- und Faksimile-prozedurgerechte Bildinformationen (fsi) umgesetzt werden und diese an eine Bildabtasteinrichtung (BAE) der Faksimile-Teilnehmereinrichtung (FAX) übermittelt werden, in der das Abtasten der Vorlagen und das Faksimile-gerechte Aufbereiten der abgetasteten Bildinformationen (fsi) durchgeführt und von der die Bildinformationen (fsi) an eine die Übermittlung über das Kommunikationsnetz (KE) steuernde und in der Faksimile-Teilnehmereinrichtung (FAX) angeordnete Kommunikationseinrichtung (KE) geführt werden.

2. Verfahren nach Anspruch 1,
**dadurch gekennzeichnet,**
daß in der Informations- und Formatwandlereinrichtung (UE) sowie in den Adaptionsmitteln die Video-Bildinformationen (vbi) hinsichtlich Bildpunkte pro Zeile, Zeilen pro Bild, Helligkeitswerte und physikalischer Eigenschaften in Faksimile-gerechte Bildinformationen (fsi) umgesetzt werden.

3. Verfahren nach mindestens einem der vorhergehenden Ansprüche,
**dadurch gekennzeichnet,**
daß der Verbindungsauf- und -abbau von einer zusammen mit einem Fernsprechendgerät (FAP) über eine Umschalteeinrichtung (KE) an ein Fernsprechnetz (FE) angeschlossenen Faksimile-Teilnehmereinrichtung (FAX) zu einer gewünschten an das Fernsprechnetz (FE) angeschlossenen Faksimile-Teilnehmereinrichtung (FAX) mit Hilfe der Signalisierungsmittel des Fernsprechendgerätes (FAP) durchgeführt wird.

4. Verfahren nach mindestens einem der vorhergehenden Ansprüche,
**dadurch gekennzeichnet,**
daß die Faksimile-gerechten Bildinformationen (fsi) an eine einer bestimmten Faksimile-Teilnehmereinrichtung (FAX) zugeordneten Speichereinrichtung (Mailbox) einer Vermittlungseinrichtung des Kommunikationsnetzes (FE) durch eine entsprechende Verbindungssignalisierung übermittelt werden.

5. Verfahren nach Anspruch 4,
**dadurch gekennzeichnet,**
daß das Vorliegen der Bildinformationen (fsi) der der Speichereinrichtung zugeordneten Faksimile-Teilnehmereinrichtung (FAX) optisch oder akustisch angezeigt wird.

6. Verfahren nach mindestens einem der vorhergehenden Ansprüche,
**dadurch gekennzeichnet,**
daß die Informations- und Formatwandlereinrichtung (UE) sowie die Adaptionsmittel der Videoeinrichtung (VE) zugeordnet werden.

7. Verfahren nach mindestens einem der vorhergehenden Ansprüche,
**dadurch gekennzeichnet,**
daß die Informations- und Formatwandlereinrichtung (UE) sowie die Adaptionsmittel der Faksimile-Teilnehmereinrichtung (FAX) zugeordnet werden.

8. Verfahren nach mindestens einem der vorhergehenden Ansprüche,
**dadurch gekennzeichnet,**
daß Informations- und Formatwandlereinrichtung (UE) sowie die Adaptionsmittel einer separaten Adaptereinrichtung zugeordnet werden.

9. Verfahren nach mindestens einem der vorhergehenden Ansprüche,
**dadurch gekennzeichnet**,
daß die Videoeinrichtung (VE) mit der Faksimile-Teilnehmereinrichtung (FAX) oder die Adaptereinrichtung mit der Video- und der Faksimile-Teilnehmereinrichtung (VE, FAX) mit Hilfe von Steckeinrichtungen (SE) verbunden wird.

## Claims

1. Method for transmitting video image information (vbi), which is formed in a video device (VE) with the aid of a video camera (VAE) and represents an image, via a facsimile subscriber unit (FAX) connected to a communication network (FE) with the aid of a facsimile transmission procedure to a further facsimile subscriber unit (FAX) which is connected to the communication network (FE) and is determined by a connection signalling, in which the image information (fsi) received in the facsimile format is evaluated and represented on a paper document with the aid of the image reproduction device (BWE) present in the facsimile subscriber unit, in which the video image information (vbi) formed in the video device (VE) is buffered in an image store (BSP) and is converted into facsimile format-compatible and facsimile procedure-compatible image information (fsi) with the aid of information and format conversion devices (UE) as well as adapter means, and this information is transmitted to an image scanning device (BAE) of the facsimile subscriber unit (FAX), in which the scanning of the documents and the facsimile-compatible preprocessing of the scanned image information (fsi) is carried out and from which the image information (fsi) is sent to a communication device (KE) that controls the transmission across the communication network (KE) and is arranged in the facsimile subscriber unit (FAX).

2. Method according to Claim 1, characterized in that the video image information (vbi) is converted in the information and format conversion device (UE) as well as in the adapter means into facsimile-compatible image information (fsi) with respect to pixels per line, lines per image, brightness values and physical properties.

3. Method according to at least one of the preceding claims, characterized in that the connection establishment and cleardown of a facsimile subscriber unit (FAX), which is connected together with a telephone terminal (FAP) to a telephone network (FE) via a switchover device (KE), to a desired facsimile subscriber unit (FAX) connected to the telephone network (FE) is carried out using the signalling means of the telephone terminal (FAP).

4. Method according to at least one of the preceding claims, characterized in that the facsimile-compatible image information (fsi) is transmitted to a storage means (mailbox) of switching equipment of the communication network (FE) assigned to a specific facsimile subscriber unit (FAX) by means of corresponding connection signalling.

5. Method according to Claim 4, characterized in that the presence of image information (fsi) of the facsimile subscriber unit (FAX) assigned to the storage means is indicated visually or acoustically.

6. Method according to at least one of the preceding claims, characterized in that the information and format conversion device (UE) as well as the adapter means are assigned to the video device (VE).

7. Method according to at least one of the preceding claims, characterized in that the information and format conversion device (UE) as well as the adapter means are assigned to the facsimile subscriber unit (FAX).

8. Method according to at least one of the preceding claims, characterized in that information and format conversion device (UE) as well as the adapter means are assigned to a separate adapter device.

9. Method according to at least one of the preceding claims, characterized in that the video device (VE) is connected to the facsimile subscriber unit (FAX) or the adapter device is connected to the video device and the facsimile subscriber unit (VE, FAX) with the aid of plug means (SE).

## Revendications

1. Procédé de transmission d'informations d'images vidéo (vbi), formées dans un dispositif vidéo (VE) à l'aide d'une caméra vidéo (VAE) et représentant une image, par l'intermédiaire d'un poste d'abonné de fac-similé (FAX) raccordé à un réseau de communication (FE), au moyen d'une procédure de transmission de fac-similé à un autre poste d'abonné de fac-similé (FAX), qui est raccordé au réseau de communication (FE) et est déterminé par une signalisation de liaison et dans lequel on évalue les informations d'images (fsi), qui sont reçues avec le format de fac-similé, et on les représente sur une feuille de papier à l'aide du dispositif de reproduction d'images (BWE) présent dans le poste d'abonné de fac-similé, les informations d'images (vbi), formées dans le dispositif vidéo (VE), étant mémorisées temporairement dans une mémoire d'images (BSP) et étant converties, à l'aide de dispositifs (UE) de conversion d'informations et de formats ainsi que de moyens adaptateurs, en des informations d'images (fsi), qui sont adaptées au format de fac-similé et à la procédure de fac-similé, et ces informations étant retransmises à un dispositif de balayage d'image (BAE) du poste d'abonné de fac-similé (FAX), dans lequel on effectue le balayage des feuilles et la préparation, adaptée au fac-similé, des informations d'images (fsi) balayées, et au moyen duquel on envoie les informations d'images (fsi) à un dispositif de communication (KE), qui commande la transmission par l'intermédiaire du réseau de communication (FE) et qui est disposé dans le poste d'abonné de fac-similé (FAX).

2. Procédé suivant la revendication 1, caractérisé par le fait que dans le dispositif (UE) de conversion d'informations et de formats ainsi que dans les moyens adaptateurs, on convertit les informations d'images vidéo (vbi), en ce qui concerne le nombre de points d'image par ligne, le nombre de lignes par image, les valeurs de luminosité et les caractéristiques physiques, en des informations d'images (fsi) adaptées au fac-similé.

3. Procédé suivant au moins l'une des revendications précédentes, caractérisé par le fait que l'on effectue l'établissement et la suppression d'une liaison conjointement depuis un poste d'abonné de fac-similé (FAX), raccordé, conjointement avec un terminal téléphonique (FAP), à un réseau téléphonique (FE) par l'intermédiaire d'un dispositif de commutation (KE), à un poste d'abonné de fac-similé souhaité (FAX) raccordé au réseau téléphonique (FE), à l'aide des moyens de signalisation du terminal téléphonique (FAP).

4. Procédé suivant au moins l'une des revendications précédentes, caractérisé par le fait que l'on transmet les informations d'images (fsi) adaptées au fac-similé, à un dispositif de mémoire (Mailbox), associé à un poste d'abonné de fac-similé déterminé (FAX), d'un dispositif de commutation du réseau de communication (FE) par une signalisation de liaison correspondante.

5. Procédé suivant la revendication 4, caractérisé par le fait que l'on indique optiquement ou acoustiquement la présence des informations d'images (fsi) du poste d'abonné de fac-similé (FAX) associé au dispositif de mémoire.

6. Procédé suivant au moins l'une des revendications précédentes, caractérisé par le fait que l'on associe le dispositif (UE) de conversion d'informations et de formats ainsi que les moyens adaptateurs au dispositif vidéo (VE).

7. Procédé suivant au moins l'une des revendications précédentes, caractérisé par le fait que l'on associe le dispositif (UE) de conversion d'informations et de formats ainsi que les moyens adaptateurs au poste d'abonné de fac-similé (FAX).

8. Procédé suivant au moins l'une des revendications précédentes, caractérisé par le fait que l'on associe le dispositif (UE) de conversion d'informations et de formats ainsi que les moyens adaptateurs à un dispositif adaptateur séparé.

9. Procédé suivant au moins l'une des revendications précédentes, caractérisé par le fait que l'on relie le dispositif vidéo (VE) au poste d'abonné de fac-similé (FAX), ou on relie le dispositif adaptateur au poste d'abonné vidéo et de fac-similé (VE, FAX) à l'aide de dispositifs de connexion (SE).
